# EUROPÄISCHE PATENTANMELDUNG

(11) **EP 1 030 181 A2**
(43) Veröffentlichungstag der Anmeldung: **23.08.2000**
(21) Anmeldenummer: 00101699.7
(22) Anmeldetag: 03.02.2000
(51) Int. Cl.: G01P 3/487, G01P 3/48, G01P 3/489, G01P 3/488

(54) **Drehzahlgeber**

(30) Priorität: 19.02.1999 DE 19906937
(71) Anmelder: Mannesmann VDO Aktiengesellschaft, 60388 Frankfurt am Main (DE)
(72) Erfinder: Wallrafen, Werner, 65719 Hofheim (DE)
(74) Vertreter: Rassler, Andrea, Dipl.-Phys.

(57) **Zusammenfassung**

Meßwertgeber zur Erfassung der Drehzahl eines rotierenden Maschinenteils, insbesondere eines Fahrzeugrades, mit einem, mit dem Maschinenteil drehbaren, magnetisch wirksamen Encoder, der in vorgegebener Folge in Winkelteile unterteilte, magnetisch wirksame Bereiche, insbesondere Zähne aus ferromagnetischem Material oder einen Magnetpol-Ring, aufweist und mit winkelversetzt angeordneten Magnetsensoren zur Erzeugung zweier gegeneinander phasenversetzter Meßsignale sowie Mitteln zur Verknüpfung der von den Sensoren abgegebenen Meßsignale zu einem Ausgangssignal, wobei das Ausgangssignal zur Erreichung der vorgegebenen Meßauflösung eine gegenüber den Meßsignalen der Magnetsensoren erhöhte Frequenz aufweist.

## Beschreibung

Die Erfindung betrifft einen Drehzahlgeber zur Erfassung der Drehzahl eines rotierenden Maschinenteils, insbesondere eines Fahrzeugrades, mit einer vorgegebenen Meßauflösung, mit wenigstens einem, mit dem Maschinenteil drehbaren, magnetisch wirksamen Encoder, der in vorgegebener Folge in Winkelteile unterteilte, magnetisch wirksame Bereiche, insbesondere Zähne aus ferromagnetischem Material oder einen Magnetpol-Ring, aufweist und der bei Drehung in wenigstens einem, relativ zu dem Encoder feststehend angeordneten, von diesem durch einen Luftspalt getrennten Magnetsensor ein der Winkelteilung des Encoders entsprechendes Meßsignal erzeugt, dessen Frequenz mit der Drehfrequenz des Maschinenteils korrespondiert.

Heutige Drehzahlgeber, die zur Messung der Raddrehzahl von Kraftfahrzeugen verwendet werden, müssen, insbesondere für den Einsatz in Verbindung mit ABS-Systemen, Anfahrhilfen, Fahrdynamik- und Antischlupfregelungen, eine Auflösung von wenigstens etwa 40 bis 60 Impulsen je Radumdrehung aufweisen. Bei gebräuchlichen Gebern wird ein an den rotierenden Bauteilen befestigter Encoder verwendet, welcher in eine der Auflösung des Drehzahlgebers entsprechende Anzahl hartmagnetischer Polpaare unterteilt ist, bzw. aus einem aus ferromagnetischem Werkstoff gefertigten Zahnrad mit der entsprechenden Zähnezahl besteht. Im letzten Fall ist der magnetisch empfindliche Sensor, beispielsweise ein Hall-Sensor oder ein magnetoresistiver Sensor, durch einen Permanentmagneten magnetisch vorgespannt. Der Encoder ist über einen Luftspalt mit einem Magnetsensor magnetisch gekoppelt. Durch das bei Drehung des Encoders ständig wechselnde Magnetfeld wird ein Meßsignal erzeugt, dessen Frequenz mit der Drehfrequenz des Encoders korrespondiert.

Herkömmliche Magnetsensoren lassen nur eine maximale Luftspaltweite von etwa 2 mm zu, weil ansonsten das Meßsignal zu schwach wird. Das bedingt einen erheblichen Fertigungsaufwand.

In EP 0 806 673 wird ein Drehzahlgeber vorgeschlagen, der einen GMR-Sensor (grant magnetoresistive effect) verwendet. Durch die höhere Empfindlichkeit eines derartigen Sensors funktioniert der Geber auch bei großen Luftspaltweiten von etwa 4 mm. Das von dem GMR-Sensor abgegebene Meßsignal weist gegenüber demjenigen eines herkömmlichen Sensors die doppelte Frequenz auf, da die Kennlinie des GMR-Sensors spiegelsymmetrisch ist. Darüber hinaus haben kleinere Luftspalte ein ungünstiges Tastverhältnis des Meßsignals zur Folge. Durch Halbierung der Frequenz des Meßsignals mittels eines Frequenzteilers kann das Tastverhältnis stabilisiert werden. Das Tastverhältnis des Meßsignals dieser GMR-Sensoren ist stark von der Luftspaltweite abhängig, so daß der Geber zwar bei großen Luftspaltweiten funktioniert, sein Verhalten sich aber stark verändert, wenn der Luftspalt nicht konstant bleibt. So ändert sich der Luftspalt beispielsweise mit dem Belastungszustand des rotierenden Maschinenteils oder mit der Abnutzung seiner Lagerung.

Beim Anbau eines derartigen Drehzahlgebers an den Rädern eines Kraftfahrzeugs hat ein großzügig ausgelegter Luftspalt erhebliche Vorteile, da an dieser Stelle große dynamische Kräfte auftreten und die Konstruktion sich entsprechend stark elastisch verformt. Dadurch verändert sich die Geometrie und damit auch der Luftspalt des Drehzahlgebers ständig in erheblichem Maße. Die bisher gefundenen Lösungen dieses Problems sind nur unter großen Kosten zu verwirklichen.

Aufgabe der vorliegenden Erfindung ist es, einen Drehzahlgeber anzugeben, welcher auch bei einem vergleichsweise großen, nicht konstanten Luftspalt noch sicher funktioniert, aber dennoch einfach und preiswert herstellbar ist und mit der notwendigen Auflösung arbeitet.

Die Aufgabe wird dadurch gelöst, daß die Winkelteilung des Encoders zur Erzeugung auswertbarer Meßsignale bei unkonstantem Luftspalt gröber ist als es die vorgegebene Meßauflösung erfordert und wenigstens zwei in Drehrichtung, relativ zum Encoder zur Erzeugung wenigstens zweier gegeneinander phasenversetzter, der Winkelteilung des Encoders entsprechenden Meßsignale feststehend hintereinanderliegend angeordnete Magnetsensoren vorgesehen sind, und Mittel zur Verknüpfung der von den Sensoren abgegebenen Meßsignale zu einem Ausgangssignal vorgesehen sind, wobei das Ausgangssignal zur Erreichung der vorgegebenen Meßauflösung eine gegenüber den Meßsignalen der Magnetsensoren erhöhte Frequenz aufweist.

Dazu ist bei einer ersten Ausgestaltung der Erfindung vorgesehen, daß die Magnetsensoren Hall-Elemente aufweisen.

Bei einer weiteren Ausgestaltung der Erfindung ist vorgesehen, daß die Magnetsensoren magnetoresistive Sensorelemente aufweisen.

Durch die Verwendung mehrerer Sensoren läßt sich die erforderliche Meßauflösung auch dann erreichen, wenn die Winkelteilung des Encoders viel kleiner als die erforderliche Auflösung des Meßsignals ist.

Wird die Teilung des Encoders verkleinert, so resultiert daraus eine größere magnetische Flußdichte, da die Abstände der magnetisch wirksamen Elemente des Encoders sich vergrößern. Beispielsweise wird die Zähnezahl bzw. die Polzahl eines aus ferromagnetischem bzw. hartmagnetischem Werkstoff bestehenden Encoder-Zahnrades gegenüber der gewünschten Auflösung halbiert. Dadurch vergrößern sich die Zahnlücken bzw. die Pole des Encoders und in der Folge auch die Amplitude des Meßsignals. Die einzelnen Meßsignale werden anschließend derart miteinander verknüpft, daß die Winkelteilung des Encoders halb so groß wie die Auflösung des Drehzahlgebers ist und daß die Frequenz des Ausgangssignals das doppelte der Frequenz der Meßsignale beträgt. Dies läßt sich durch einfache Verknüpfungen, welche in einer an die Sensoren angeschlossenen oder integrierten Schaltung oder in einem Mikroprozessor vorgenommen werden, verwirklichen.

Ein solcher Sensor arbeitet zuverlässig bei Luftspaltbreiten größer als 2mm.

Alternativ wird zur Lösung der der Erfindung zugrundeliegenden Aufgabe vorgeschlagen, daß wenigstens zwei in Drehrichtung, relativ zum Encoder zur Erzeugung wenigstens zweier gegeneinander phasenversetzter, der Winkelteilung des Encoders entsprechender Meßsignale feststehend hintereinanderliegend angeordnete derartige Magnetsensoren vorgesehen sind, bei welchen sich das Vorzeichen ihrer Kennlinie wenigstens annähernd spiegelsymmetrisch bezüglich der magnetischen Feldstärke verhält, daß die Winkelteilung des Encoders zur Erzeugung auswertbarer Meßsignale bei unkonstantem Luftspalt gröber ist, als die vorgegebene Meßauflösung erfordert, und Mittel zur Verknüpfung der von den Magnetsensoren abgegebenen Meßsignale zu einem Ausgangssignal vorgesehen sind, wobei das Ausgangssignal zur Erreichung eines guten Tastverhältnisses gegenüber den ursprünglichen Meßsignalen eine geringere Frequenz aufweist.

Eine derartige Kennlinie findet man beispielsweise bei sogenannten GMR-Sensoren. GMR-Sensoren bestehen in der Regel aus zwei oder vier magnetoresistiven Sensorelementen, welche auf einem kleinen Chip zu einer Wheatstoneschen Brücke verschaltet sind. Das Meßsignal eines derartigen Sensors wird aus der Veränderung des Diagonalwiderstandes der Brückenschaltung hergeleitet.

GMR-Sensoren haben gegenüber herkömmlichen magnetoresistiven Sensoren eine spiegelsymmetrische Kennlinie, so daß sie ein Meßsignal mit der doppelten Frequenz des Meßsignals herkömmlicher Sensoren abgeben. Dieses Meßsignal hat jedoch, insbesondere bei hohen magnetischen Feldstärken, ein ungünstiges Tastverhältnis. Ein stabiles und von der Feldstärke und somit von der Luftspaltweite unabhängiges Tastverhältnis des Ausgangssignals wird erfindungsgemäß durch die Verknüpfung der Meßsignale unter Verringerung, beispielsweise Halbierung, der Frequenz der Meßsignale erreicht.

Eine erfindungsgemäße Verknüpfung der einzelnen Meßsignale läßt sich beispielsweise bewerkstelligen durch Mittel zur binären Exklusiv-Oder-Verknüpfung zu dem Ausgangssignal, durch Mittel zur Multiplikation zu dem Ausgangssignal oder durch Mittel zur Betragsbildung der Differenz zur Erzeugung des Ausgangssignals.

Bei einer Ausgestaltung der Erfindung ist vorgesehen, daß die Meßsignale um etwa 90° phasenversetzt sind. Die Signale können damit auf einfache Weise zu einem Ausgangssignal verknüpft werden, welches die doppelte Frequenz der Meßsignale aufweist.

Die Verknüpfung der Meßsignale kann dadurch erfolgen, daß die Magnetsensoren über Schwellwertschalter zur Erzeugung des Ausgangssignals an eine Exklusiv-Oder-Schaltung angeschlossen sind. Diese Anordnung kann sowohl in Verbindung mit Hall-Sensoren oder magnetoresistiven Sensoren als auch mit GMR-Sensoren verwendet werden.

Bei einer nächsten Ausgestaltung der Erfindung erfolgt die Verknüpfung der Meßsignale dadurch, daß die Sensoren zur Erzeugung des Ausgangssignals an eine Multiplikationsschaltung angeschlossen sind.

Bei einer weiteren Ausgestaltung der Erfindung mit GMR-Sensoren ist vorgesehen, daß die Sensoren über Schwellwertschalter mit Flip-Flop-Schaltungen verbunden sind, deren Ausgänge mit einer Exklusiv-Oder-Schaltung zur Erzeugung des Ausgangssignals verknüpft sind.

Für den Fall der spiegelsymmetrischen GMR-Sensoren mit doppelter Frequenz wird zunächst über Flip-Flops die Signalfrequenz halbiert, bevor durch die Exklusiv-Oder-Schaltung die zwei Kanäle verknüpft werden. Diese Frequenzhalbierung ist zum Zwecke einer Stabilisierung des Tastverhältnisses auf genau 50 % vorgesehen.

Zur Bestimmung der Drehrichtung ist bei einer Weiterbildung der Erfindung vorgesehen, daß Mittel zur Erzeugung eines Drehrichtungssignals aus den Meßsignalen vorgesehen sind. Die Drehrichtung kann beispielsweise durch Verknüpfung der Meßsignale mittels eines flankengesteuerten Flip-Flops auf an sich bekannte Weise geschehen. Das Signal der Drehrichtung kann dem Signal der Drehfrequenz in an sich bekannter Weise zur Übertragung über eine Zweidrahtschnittstelle aufmoduliert werden. Einzelheiten dazu sind beispielsweise in der Patentanmeldung 198 19 783.7 angegeben.

Die zwei erforderlichen Sensorsignale zum Zwecke der Frequenzerhöhung erlauben eine einfach realisierbare Drehrichtungserkennung für zusätzliche Zwecke ohne größeren Mehraufwand.

Durch die in weiteren Unteransprüchen aufgeführten Maßnahmen werden weitere vorteilhafte Verbesserungen der Erfindung erreicht.

Ausführungsbeispiele der Erfindung sind in der Zeichnung anhand mehrerer Figuren dargestellt und in der nachfolgenden Beschreibung näher erläutert. Es zeigt:
- Fig. 1: eine Schemadarstellung eines erfindungsgemäßen Drehzahlgebers mit halbierter Polzahl und zwei magnetischen Sensoren,
- Fig. 2: eine Schemadarstellung eines Drehzahlgebers nach dem Stand der Technik mit nichthalbierter Polzahl,
- Fig. 3: ein Blockschaltbild eines erfindungsgemäßen Drehzahlgebers mit zwei magnetischen Sensoren, Schwellwertschaltern und einer Exklusiv-Oder-Verknüpfung der Meßsignale,
- Fig. 4: Signaldiagramme des bekannten Drehzahlgebers gemäß Fig. 2 mit Schwellwertschaltung des Meßsignals bei Verwendung zweier magnetischer Sensoren,
- Fig. 5: Signaldiagramme des Drehzahlgebers gemäß Fig. 1 bei Verwendung zweier magnetischer Sensoren,
- Fig. 6: ein Blockschaltbild eines erfindungsgemäßen Drehzahlgebers mit Multiplikation der Meßsignale,
- Fig. 7: ein Blockschaltbild eines erfindungsgemäßen Drehzahlgebers mit Subtraktion und anschließender Betragsbildung der Meßsignale,
- Fig. 8: Signaldiagramme des bekannten Drehzahlgebers gemäß Fig. 2 bei Verwendung von GMR-Sensoren mit spiegelsymmetrischer Kennlinie und kleinem Luftspalt,
- Fig. 9: Signaldiagramme der Drehzahlgeber gemäß den Blockschaltbildern der Figuren 6 und 7 bei Verwendung von zwei GMR-Sensoren mit etwa 90° Phasenversatz,
- Fig. 10: ein Blockschaltbild eines erfindungsgemäßen Drehzahlgebers mit Schwellwertschaltung, Flip-Flop-Schaltung und Exklusiv- Oder-Verknüpfung der Signale, insbesondere für GMR-Sensoren,
- Fig. 11: ein Blockschaltbild eines erfindungsgemäßen Drehzahlgebers mit Exklusiv-Oder-Verknüpfung der Meßsignale ohne Flip-Flop-Schaltung zur Frequenzhalbierung,
- Fig. 12: Signaldiagramme des bekannten Drehzahlgebers gemäß Fig. 2 bei Verwendung von GMR-Sensoren, Schwellwertschaltung und Betragsbildung des Meßsignals,
- Fig. 13: Signaldiagramme der Drehzahlgeber gemäß den Blockschaltbildern der Figuren 10 und 11 bei Verwendung von GMR-Sensoren,
- Fig. 14: Diagramme der Kennlinie eines GMR-Sensors, zweier unterschiedlich starker magnetischer Eingangsgrößen und der daraus resultierenden Meßsignale,
- Fig. 15: Schemadarstellungen dreier erfindungsgemäßer Schaltungsanordnungen für Drehzahlgeber mit je zwei magnetischen Sensoren und
- Fig. 16: ein Schaltschema und Signaldiagramme zu Ausgangssignalen der verwendeten Sensoren bei Benutzung einer Flip-Flop-Schaltung zur Drehrichtungserkennung.

Gleiche Teile sind in den Figuren mit gleichen Bezugszeichen versehen.

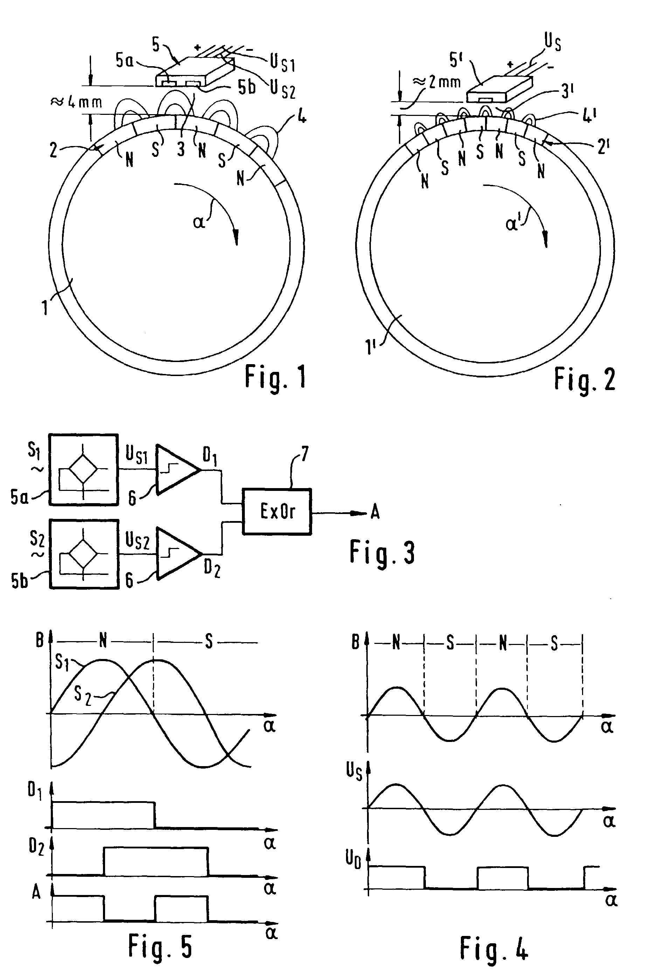

Fig. 1 zeigt eine Schemadarstellung eines erfindungsgemäßen Drehzahlgebers, bestehend aus einem Encoderrad 1, welches an einer nicht dargestellten Welle befestigt ist. Das Encoderrad 1 weist an seinem Umfang Magnetpolpaare N, S auf, welche sich nach außen über einen Luftspalt 3 hinweg erstreckende magnetische Felder 4 erzeugen. Die magnetischen Felder 4 rufen bei Drehung des Encoderrades 1 in in einem Sensorgehäuse 5 angebrachten Sensoren Meßsignale U_{S1}, U_{S2} hervor. Aufgrund der groben Winkeleinteilung der Polpaare N, S ergeben sich relativ große Feldstärken der magnetischen Felder 4. Damit kann der Luftspalt 3 relativ groß (etwa 4 mm) gewählt werden. Die Anzahl der Polpaare 2 des Encoderrades 1 ist in diesem Beispiel etwa halb so groß wie die Meßauflösung des Drehzahlgebers. Als Sensoren 5a, 5b können sowohl Hall-Sensoren, anisotrope magnetoresistive Sensoren oder auch GMR-Sensoren zum Einsatz kommen. Der Abstand der beiden Sensoren 5a, 5b entspricht dem halben Abstand der Polpaare.

In Fig. 2 ist ein Drehzahlgeber nach dem Stand der Technik schematisch dargestellt. Die Anzahl der Magnetpole 2' des Encoderrades 1' entspricht der erforderlichen Meßauflösung. Die Magnete 2' erzeugen nur schwache Felder 4', da ihre Größe begrenzt ist. Das bedingt einen recht engen (etwa 2 mm) Luftspalt 3' zwischen dem Encoderrad 1' und dem Sensor 5'.

Im folgenden werden analoge Meßsignale mit U mit Indizes bezeichnet. Diskretisierten Meßsignalen wird der Buchstabe D mit Indizes zugeordnet. Die Ausgangssignale der diversen Schaltungen werden mit A bezeichnet. B ist die an den Sensoren wirksame magnetische Flußdichte. Die Signaldiagramme werden über dem Drehwinkel α des Encoderrades 1 jeweils des erfindungsgemäßen bzw. des bekannten Drehzahlgebers dargestellt. Diejenigen Bereiche der Diagramme, bei welchen sich der Nordpol N eines Polpaares N, S des Encoderrades auf der Symmetrieachse des Sensorpaares 5 befindet, sind mit N überschrieben. Entsprechendes gilt für den Südpol S.

Zur Verdoppelung der Frequenz der Meßsignale U_{S1}, U_{S2} gemäß Fig. 1 werden diese, wie in Fig. 3 dargestellt, zunächst zur Diskretisierung über Schwellwertschalter 6 geführt und anschließend bei 7 exklusiv-oder verknüpft. Das Ausgangssignal A weist die doppelte Frequenz der Meßsignale U_{S1}, U_{S2} auf. Obwohl die Teilung des Encoders 1 in Fig. 1 geringer ist, wird die gewünschte Meßauflösung erreicht.

In Fig. 4 sind die Diagramme der magnetischen Feldstärke B, der Meßspannung U_{S} eines Hall- oder magnetoresistiven Sensors 5' (Fig. 2), sowie der mit einem nicht dargestellten Schwellwertschalter diskretisierten Meßspannung U_{D} eines Drehzahlgebers gemäß Fig. 2 dargestellt.

Fig. 5 zeigt Signaldiagramme eines erfindungsgemäßen Drehzahlgebers nach den Figuren 1 und 3 bei Verwendung magnetoresistiver Sensoren oder Hall-Sensoren 5a, 5b. Ein erster 5a der Sensoren 5a, 5b wird mit dem Feldstärkeverlauf S1 beaufschlagt und der zweite 5b mit dem Feldstärkeverlauf S2. Die daraus resultierenden, an den Ausgängen der Schwellwertschalter 6 anliegenden, diskreten Meßsignale D1 und D2 sind entsprechend dem Abstand der Sensoren 5a, 5b zueinander um etwa 90° phasenversetzt. Durch Exklusiv-Oder-Verknüpfung 7 entsteht daraus das Ausgangssignal A.

In den Ausführungsbeispielen, die anhand der folgenden Figuren erläutert werden, werden GMR-Sensoren 5a, 5b mit Meßsignalen U_{S1} und U_{S2} verwendet.

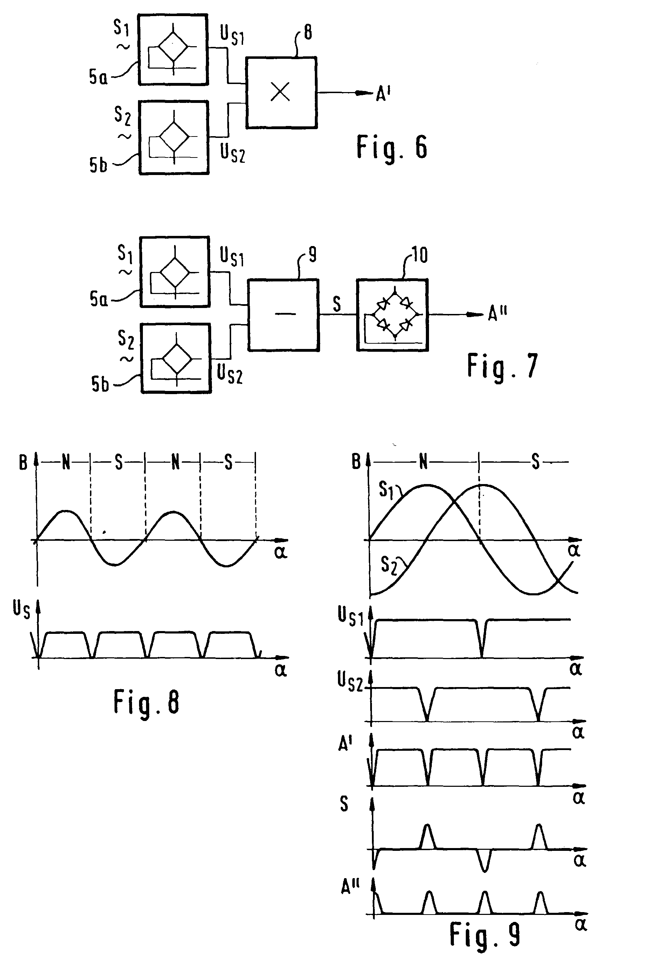

Fig. 6 zeigt ein Blockschaltbild eines erfindungsgemäßen Drehzahlgebers mit Multiplikationsfunktion 8 zur Verknüpfung der Meßsignale U_{S1}, U_{S2} zu einem Ausgangssignal A', welches die doppelte Frequenz der Meßsignale U_{S1}, U_{S2} aufweist.

In Fig. 7 ist ein Blockschaltbild eines erfindungsgemäßen Drehzahlgebers mit Subtraktionsfunktion 9 und anschließender Betragsbildung 10 dargestellt, woraus ebenfalls ein Ausgangssignal A'' mit einer doppelt so großen Frequenz entsteht wie die der Meßsignale U_{S1}, U_{S2}.

Bei Verwendung eines GMR-Sensors hat die Meßspannung U_{S}, wie auch aus Fig. 8 ersichtlich ist, von vorn herein die doppelte Frequenz der Eingangsgröße B. Die Figur zeigt die Signaldiagramme eines bekannten Drehzahlgebers gemäß Fig. 2 bei Verwendung eines GMR-Sensors 5' bei kleinem Luftspaltabstand.

In Fig. 9 sind die Signaldiagramme der erfindungsgemäßen Drehzahlgeber gemäß den Blockschaltbildern der Figuren 6 und 7 bei Verwendung von GMR-Sensoren 5a, 5b dargestellt. Dabei gelten die Darstellungen von S₁, S₂, U_{S1} und U_{S2} für beide Drehzahlgeber, während A' beim Drehzahlgeber nach Fig. 6 auftritt und S und A'' beim Drehzahlgeber nach Fig. 7 auftreten.

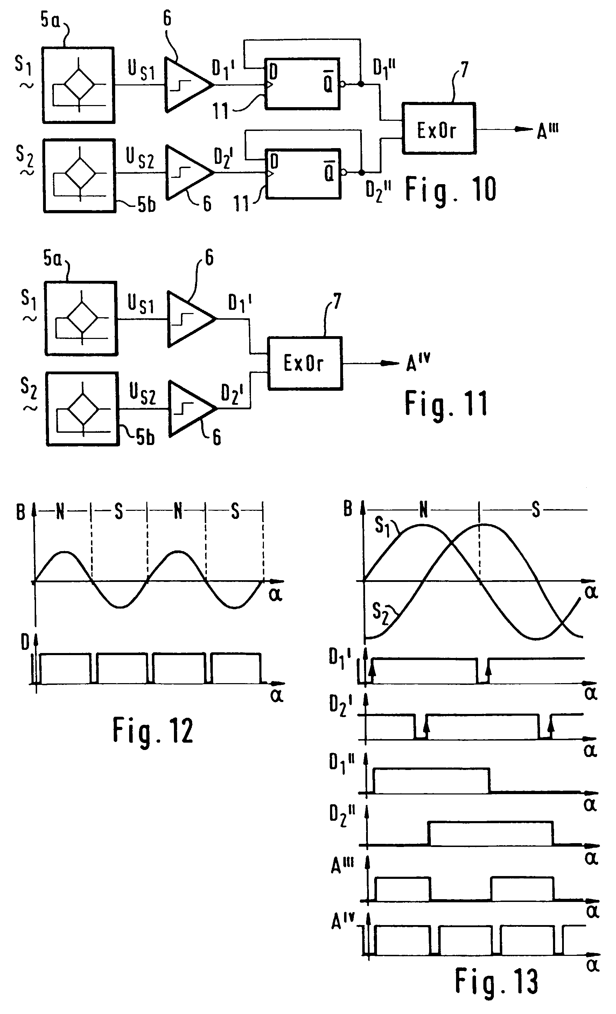

Fig. 10 zeigt ein Blockschaltbild eines erfindungsgemäßen Drehzahlgebers mit zur Diskretisierung der Meßsignale U_{S1}, U_{S2} vorgesehenen Schwellwertschaltern 6, je einer nachgeschalteten Flip-Flop-Schaltung 11 zur Frequenzhalbierung des GMR-Sensorsignals und einer abschließenden Exklusiv-Oder-Verknüpfung der Meßsignale D₁'', D₂'' zur Frequenzverdopplung.

In Fig. 11 ist ein Blockschaltbild eines erfindungsgemäßen Drehzahlgebers dargestellt, bei dem die Meßsignale U_{S1}, U_{S2} nach Diskretisierung bei 7 ohne Frequenzteilung exklusiv-oder verknüpft werden. Dieser Drehzahlgeber unterscheidet sich von dem in Fig. 10 dargestellten durch ein nicht stabilisiertes Tastverhältnis (A^{IV}).

Die Signaldiagramme des Drehzahlgebers gemäß Figuren 12 und 13 zeigen mit Diskretisierungen durch die Schwellwertschalter vor der Exklusiv-Oder-Verknüpfung gemäß Figuren 10 und 11 eine reine binäre Signalverarbeitung.

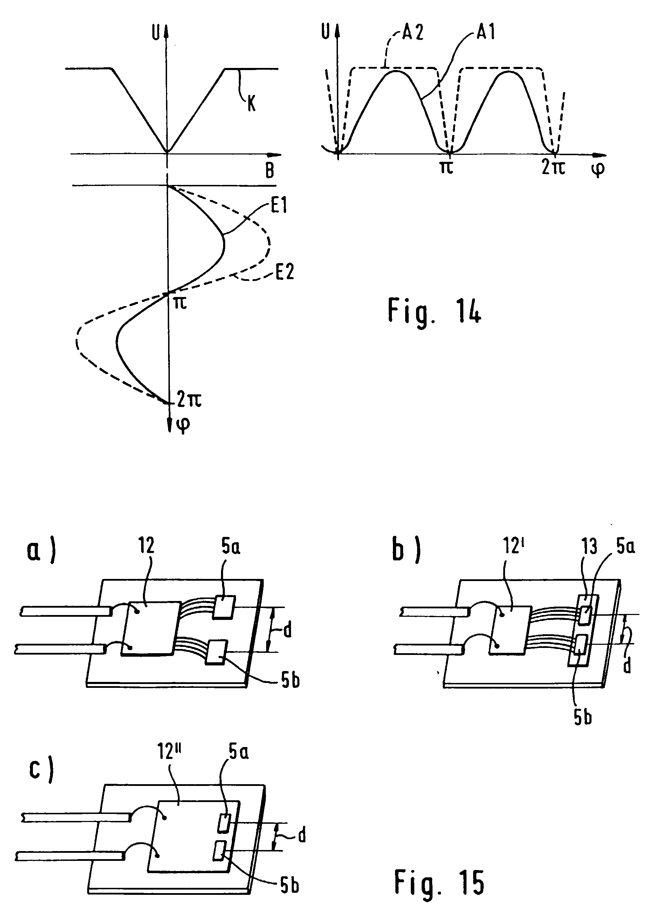

Die erfindungsgemäß verwendeten GMR-Sensoren 5a, 5b haben eine Kennlinie K, die, wie aus Fig. 14 ersichtlich ist, bezüglich ihres Vorzeichens spiegelsymmetrisch zur Eingangsgröße B ist. Durch dieses Verhalten entsteht aus einer Eingangsgröße E1, E2 ein Meßsignal A1, A2 doppelter Frequenz. Die gestrichelte Linie zeigt das Verhalten bei großen magnetischen Flußdichten, die bei kleinen Luftspaltmaßen auftreten.

Fig. 15 zeigt schematisch wie die Sensoren 5a und 5b jeweils mit einer Auswerteschaltung 12 verbunden und integriert werden können. In Bild a) sind die Sensoren 5a, 5b einzeln im Abstand d an die Schaltung 12 angeschlossen. Bild b) zeigt, daß die Sensoren 5a, 5b auf einem gemeinsamen Substrat 13 angeordnet werden können, was den Vorteil hat, daß der Abstand d bei der Fertigung der Sensoranordnung 5 sehr genau eingehalten werden kann. Aus dem gleichen Grund sind die Sensoren 5a, 5b in Bild c) auf der Schaltung 12'' selbst angeordnet.

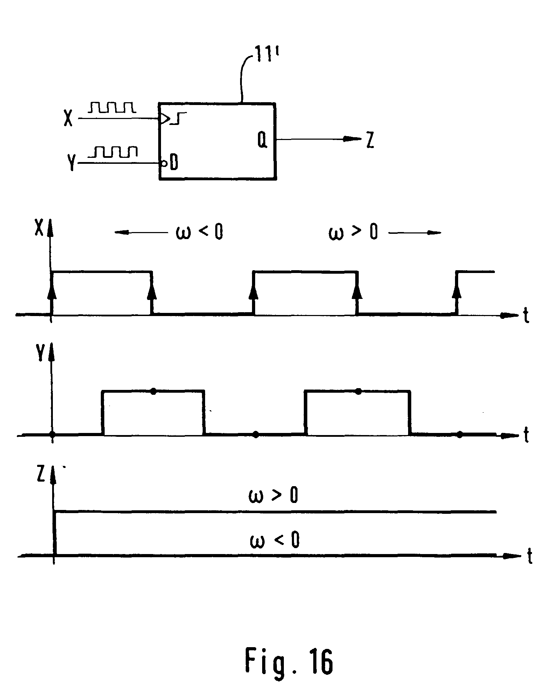

Fig. 16 zeigt, daß sich aus den Ausgangssignalen X und Y mit Hilfe einer Flip-Flop-Schaltung 11' ein Ausgangssignal Z erzeugen läßt, welches die Drehrichtung des Encoderrades anzeigt, das heißt, ob die Winkelgeschwindigkeit omega positiv oder negativ ist.

## Patentansprüche

1. Drehzahlgeber zur Erfassung der Drehzahl eines rotierenden Maschinenteils, insbesondere eines Fahrzeugrades, mit einer vorgegebenen Meßauflösung, mit wenigstens einem, mit dem Maschinenteil drehbaren, magnetisch wirksamen Encoder, der in vorgegebener Folge in Winkelteile unterteilte, magnetisch wirksame Bereiche, insbesondere Zähne aus ferromagnetischem Material oder einen Magnetpol-Ring, aufweist und der bei Drehung in wenigstens einem, relativ zu dem Encoder feststehend angeordneten, von diesem durch einen Luftspalt getrennten Magnetsensor ein der Winkelteilung des Encoders entsprechendes Meßsignal erzeugt, dessen Frequenz mit der Drehfrequenz des Maschinenteils korrespondiert, **dadurch gekennzeichnet,** daß die Winkelteilung des Encoders (1) zur Erzeugung auswertbarer Meßsignale bei unkonstantem Luftspalt gröber ist als es die vorgegebene Meßauflösung erfordert und wenigstens zwei in Drehrichtung, relativ zum Encoder (1) zur Erzeugung wenigstens zweier gegeneinander phasenversetzter, der Winkelteilung des Encoders entsprechenden Meßsignale (U_{S1}, U_{S2}) feststehend hintereinanderliegend angeordnete Magnetsensoren (5a, 5b) vorgesehen sind, und Mittel zur Verknüpfung der von den Sensoren (5a, 5b) abgegebenen Meßsignale (U_{S1}, U_{S2}) zu einem Ausgangssignal (A) vorgesehen sind, wobei das Ausgangssignal (A) zur Erreichung der vorgegebenen Meßauflösung eine gegenüber den Meßsignalen (U_{S1}, U_{S2}) der Magnetsensoren erhöhte Frequenz aufweist.

2. Drehzahlgeber nach Anspruch 1, **dadurch gekennzeichnet,** daß die Magnetsensoren Hall-Elemente aufweisen.

3. Drehzahlgeber nach Anspruch 1, **dadurch gekennzeichnet,** daß die Magnetsensoren (5a, 5b) magnetoresistive Sensorelemente aufweisen.

4. Drehzahlgeber nach einem der vorhergehenden Ansprüche, **dadurch gekennzeichnet,** daß die Winkelteilung des Encoders (1) halb so groß wie die Auflösung des Drehzahlgebers ist und daß die Frequenz des Ausgangssignals (A) das doppelte der Frequenz der Meßsignale (U_{S1}, U_{S2}) beträgt.

5. Drehzahlgeber zur Erfassung der Drehzahl eines rotierenden Maschinenteils, insbesondere eines Fahrzeugrades, mit einer vorgegebenen Meßauflösung, mit wenigstens einem, mit dem Maschinenteil drehbaren, magnetisch wirksamen Encoder, der in gleichmäßiger Folge in Winkelteile unterteilte, magnetisch wirksame Bereiche, insbesondere Zähne aus ferromagnetischem Material oder Magnetpole, aufweist und der bei Drehung in wenigstens einem, relativ zu dem Encoder feststehend angeordneten, von diesem durch einen Luftspalt getrennten Magnetsensor ein der Winkelteilung des Encoders entsprechendes Meßsignal erzeugt, dessen Frequenz mit der Drehfrequenz des Maschinenteils korrespondiert, **dadurch gekennzeichnet,** daß wenigstens zwei in Drehrichtung, relativ zum Encoder (1) zur Erzeugung wenigstens zweier gegeneinander phasenversetzter, der Winkelteilung des Encoders entsprechender Meßsignale (U_{S1}, U_{S2}) feststehend hintereinanderliegend angeordnete derartige Magnetsensoren (5a bis 5b'') vorgesehen sind, bei welchen sich das Vorzeichen ihrer Kennlinie (K) wenigstens annähernd spiegelsymmetrisch bezüglich der magnetischen Feldstärke (B) verhält, daß die Winkelteilung des Encoders (1) zur Erzeugung auswertbarer Meßsignale bei unkonstantem Luftspalt gröber ist, als die vorgegebene Meßauflösung erfordert, und Mittel zur Verknüpfung der von den Magnetsensoren (5a bis 5b'') abgegebenen Meßsignale (U_{S1}, U_{S2}) zu einem Ausgangssignal (A', A'', A''', A^{IV}) vorgesehen sind, wobei das Ausgangssignal (A', A'', A''', A^{IV}) zur Erreichung eines guten Tastverhältnisses gegenüber den ursprünglichen Meßsignalen (U_{S1}, U_{S2}) eine geringere Frequenz aufweist.

6. Drehzahlgeber nach Anspruch 5, **dadurch gekennzeichnet,** daß die Sensoren (5a, 5b) GMR-Sensoren sind.

7. Drehzahlgeber nach einem der vorhergehenden Ansprüche, **gekennzeichnet durch** Mittel (7) zur binären Exklusiv-Oder-Verknüpfung zu dem Ausgangssignal (A, A''', A^{IV}).

8. Drehzahlgeber nach einem der vorhergehenden Ansprüche, **gekennzeichnet durch** Mittel zur Multiplikation zu dem Ausgangssignal.

9. Drehzahlgeber nach einem der vorhergehenden Ansprüche, **gekennzeichnet durch** Mittel zur Betragsbildung der Differenz zur Erzeugung des Ausgangssignals.

10. Drehzahlgeber nach einem der vorhergehenden Ansprüche, **dadurch gekennzeichnet,** daß die Meßsignale (U₁, U₂) um etwa 90° phasenversetzt sind.

11. Drehzahlgeber nach einem der vorhergehenden Ansprüche, **dadurch gekennzeichnet,** daß Mittel zur Erzeugung eines Drehrichtungssignals aus den Meßsignalen (U₁, U₂) vorgesehen sind.

12. Drehzahlgeber nach Anspruch 11, **dadurch gekennzeichnet,** daß zur Drehrichtungsermittlung eine flankengesteuerte Flip-Flop-Schaltung vorgesehen ist.

13. Drehzahlgeber nach einem der vorhergehenden Ansprüche, **dadurch gekennzeichnet,** daß die Magnetsensoren (5a, 5b) über Schwellwertschalter (6) zur Erzeugung des Ausgangssignals (A, A^{IV}) an eine Exklusiv-Oder-Schaltung (7) angeschlossen sind.

14. Drehzahlgeber nach einem der vorhergehenden Ansprüche, **dadurch gekennzeichnet,** daß die Sensoren (5a, 5b) zur Erzeugung des Ausgangssignals (A') an eine Multiplikationsschaltung (8) angeschlossen sind.

15. Drehzahlgeber nach einem der vorhergehenden Ansprüche, **dadurch gekennzeichnet,** daß die Sensoren (5a, 5b) über Schwellwertschalter (6) mit Flip-Flop-Schaltungen (11) verbunden sind, deren Ausgänge mit einer Exklusiv-Oder-Schaltung (7) zur Erzeugung des Ausgangssignals (A''') verknüpft sind.

16. Drehzahlgeber nach einem der vorhergehenden Ansprüche, **dadurch gekennzeichnet,** daß die magnetisch empfindlichen Sensoren (5a, 5b) in einem gemeinsamen Gehäuse (5) angeordnet sind.

17. Drehzahlgeber nach einem der vorhergehenden Ansprüche, **dadurch gekennzeichnet,** daß die magnetisch empfindlichen Sensoren (5a, 5b) auf einem gemeinsamen Substrat angeordnet sind.

18. Drehzahlgeber nach einem der Ansprüche 11 bis 17, **dadurch gekennzeichnet,** daß Mittel zur Modulation des Drehzahlsignals mit dem Drehrichtungssignal zur Übertragung über eine Zweidrahtschnittstelle vorgesehen sind.

19. Drehzahlgeber nach einem der vorhergehenden Ansprüche, **dadurch gekennzeichnet,** daß der Encoder (1) etwa 20 bis 30 hartmagnetische Polpaare (N, S) aufweist.

20. Drehzahlgeber nach einem der Ansprüche 1 bis 18, **dadurch gekennzeichnet,** daß der Encoder aus einer mit etwa 20 bis 30 Zähnen versehenen ferromagnetischen Zahnscheibe besteht und daß der Drehzahlgeber einen feststehenden Magneten zur Erzeugung magnetischer Felder aufweist.

21. Drehzahlgeber nach einem der Ansprüche 1 bis 19, **dadurch gekennzeichnet,** daß der Encoder aus Kunststoff mit gebundenen hartmagnetischen Partikeln besteht.

22. Drehzahlgeber nach Anspruch 1 bis 19, **dadurch gekennzeichnet,** daß der Encoder aus einem Elastomer mit gebundenen hartmagnetischen Partikeln besteht.

23. Drehzahlgeber nach Anspruch 22, **dadurch gekennzeichnet,** daß der Encoder die sich mitdrehende Dichtung eines Radlagers ist.
